(19) **Europäisches Patentamt / European Patent Office / Office européen des brevets**

(11) **EP 4 095 952 A1**

(12) **EUROPEAN PATENT APPLICATION**
published in accordance with Art. 153(4) EPC

(43) Date of publication:
**30.11.2022 Bulletin 2022/48**

(21) Application number: **21789338.7**

(22) Date of filing: **29.01.2021**

(51) International Patent Classification (IPC):
***H01M 4/73*** *(2006.01)*

(52) Cooperative Patent Classification (CPC):
**H01M 4/73; Y02E 60/10**

(86) International application number:
**PCT/JP2021/003250**

(87) International publication number:
**WO 2021/210244 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2020 JP 2020072059**

(71) Applicant: **GS Yuasa International Ltd.**
**Kisshoin, Minami-ku,**
**Kyoto-shi, Kyoto 601-8520 (JP)**

(72) Inventor: **FUJITA, Kohei**
**Kyoto-shi, Kyoto 601-8520 (JP)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **CURRENT COLLECTOR FOR LEAD STORAGE BATTERY, POSITIVE ELECTRODE PLATE FOR LEAD STORAGE BATTERY, AND LEAD STORAGE BATTERY**

(57)    A current collector for a lead-acid battery includes: a frame rib; and an inner rib inside the frame rib, in which the frame rib includes a lug, an upper element continuous with the lug, a lower element facing the upper element, and a pair of side elements connecting the upper element and the lower element, in which the inner rib includes a longitudinal rib extending in a first direction from the upper element toward the lower element and a transverse rib extending in a second direction from one of the side elements toward the other of the side elements, in which a stripe pattern of a metallic fibrous structure is observed in a cross-section of the longitudinal rib which is perpendicular to the first direction, in which a peripheral region of the cross-section includes a first portion in which the fibrous structure extends along a contour of the cross-section, and a second portion other than the first portion, in which a percentage of a length of a contour corresponding to the first portion to a total length of the contour of the cross-section is 50% or more, and in which a ratio W1/W2 of a mass W1 of the frame rib to a mass W2 of the inner rib is $0.2 \leq W1/W2 \leq 0.42$.

Fig. 2A

**Description**

TECHNICAL FIELD

The present invention relates to a current collector for a lead-acid battery, a positive electrode plate for a lead-acid battery, and a lead-acid battery.

BACKGROUND ART

Lead-acid batteries are used in various applications in addition to in-vehicle applications and industrial applications. A lead-acid battery includes an electrode group in which a positive electrode plate and a negative electrode plate are alternately stacked with a separator interposed therebetween. The electrode plate includes a current collector and an electrode material held by the current collector.

Patent Document 1 proposes a lead grid plate for a lead-acid battery obtained by press-punching a rolled plate of a lead alloy, in which the thickness of vertical and transverse crosspieces inside the lead grid plate is made thinner than the thickness of an outer frame, the thickness of the outer frame is 0.8 to 1.5 mm, and the thickness of the crosspieces inside the lead grid plate is 0.6 to 0.8 mm. Further, Cited Document 1 proposes a lead grid plate for a lead-acid battery obtained by press-punching a rolled plate of a lead alloy having a thickness of 1.2 to 1.5 mm, in which an internal frame of the lead grid plate is deformed in the thickness direction to set the thickness of vertical and transverse crosspieces inside the lead grid plate in a range of 0.6 to 0.8 mm.

Patent Document 2 proposes a positive electrode grid plate including a frame rib, a lug disposed outside the frame rib, and an inner rib disposed inside the frame rib and forming a grid, in which an added mass (frame rib + lug) of the frame rib and the lug is lighter than a mass of the inner rib.

Patent Document 3 proposes a grid for a lead-acid battery including a frame rib and an inner rib including a plurality of transverse crosspieces and a plurality of vertical crosspieces, in which upper end portions of the plurality of vertical crosspieces are each connected to an upper transverse rib of the frame rib, and the plurality of vertical crosspieces extend toward a lower transverse rib side of the frame rib so as not to intersect with each other, a mass of the upper transverse rib of the frame rib is 11% or more and 14% or less of a total mass of an entire grid, and an added mass of a mass of the upper transverse rib and a mass of the plurality of vertical crosspieces is 60% or more and 70% or less of the total mass of the entire grid.

PRIOR ART DOCUMENTS

PATENT DOCUMENTS

Patent Document 1: JP-A-51-60936
Patent Document 2: JP-A-2012-174561
Patent Document 3: JP-A-05-54893

SUMMARY OF THE INVENTION

PROBLEMS TO BE SOLVED BY THE INVENTION

In Patent Documents 1 and 2, it is considered that a holding force of the electrode material is improved to some extent by adjusting the balance of the thickness or mass of the grid-like current collector. In Patent Document 3, it is considered that the deterioration of the current collectability or the deterioration of the electrode material can be suppressed to some extent by controlling the voltage characteristics of the grid-like current collector. However, when a high-temperature overcharge test is performed, the elongation or curvature of the grid-like current collector becomes remarkable, and the electrode material may fall off to deteriorate the life performance.

MEANS FOR SOLVING THE PROBLEMS

One aspect of the present invention relates to a current collector for a lead-acid battery, including: a frame rib; and an inner rib inside the frame rib. The frame rib includes a lug, an upper element continuous with the lug, a lower element facing the upper element, and a pair of side elements connecting the upper element and the lower element. The inner rib includes a longitudinal rib extending in a first direction from the upper element toward the lower element and a transverse rib extending in a second direction from one of the side elements toward the other of the side elements. A stripe pattern of a metallic fibrous structure is observed in a cross-section perpendicular to the first direction of the longitudinal rib. A peripheral region of the cross-section includes a first portion in which the fibrous structure extends along a contour of the cross-section, and a second portion other than the first portion. A percentage R1 of a length of a contour corresponding to the first portion to a total length of the contour of the cross-section is 50% or more. A ratio W1/W2 of a mass W1 of the frame rib to a mass W2 of the inner rib is $0.2 \leq W1/W2 \leq 0.42$.

BRIEF DESCRIPTION OF THE DRAWINGS

Fig. 1A is a plan view showing an appearance of a current collector for a lead-acid battery according to an embodiment of the present invention.
Fig. 1B is a plan view showing an appearance of a current collector for a lead-acid battery according to another embodiment of the present invention.
Fig. 2A is a cross-sectional photograph perpendicular to a first direction of a longitudinal rib.
Fig. 2B is a conceptual diagram of a cross-section C.
Fig. 3 is a cross-sectional photograph of an inner rib in which a cross-section of a fibrous structure is seen.
Fig. 4 is a conceptual diagram of the cross-section showing a progress state of corrosion of the inner rib.
Fig. 5 is a perspective view showing an appearance of a lead-acid battery according to the embodiment of the present invention.
Fig. 6 is a graph showing a relationship between a ratio W1/W2 of a current collector and a percentage to an initial capacity after a repeated 5hR charge-discharge test after high-temperature overcharge.
Fig. 7 is a graph showing a relationship between a percentage R1 of the current collector and a corrosion rate and a deformation amount (width elongation and height elongation).
Fig. 8 is a graph showing a relationship between the percentage R1 of the current collector and the percentage to the initial capacity after the repeated 5hR charge-discharge test.
Fig. 9 is a graph showing a relationship between WLH/WLW and width elongation of the current collector.

MODE FOR CARRYING OUT THE INVENTION

A current collector for a lead-acid battery according to one aspect of the present invention includes a frame rib and an inner rib inside the frame rib. The frame rib includes a lug, an upper element continuous with the lug, a lower element facing the upper element, and a pair of side elements connecting the upper element and the lower element. The inner rib includes a longitudinal rib extending in a first direction from the upper element toward the lower element and a transverse rib extending in a second direction from one of the side elements toward the other of the side elements. A stripe pattern of a metallic fibrous structure is observed in a cross-section perpendicular to the first direction of the longitudinal rib. A peripheral region of the cross-section includes a first portion in which the fibrous structure extends along a contour of the cross-section, and a second portion other than the first portion. A percentage R1 of a length of a contour corresponding to the first portion to a total length of the contour of the cross-section is 50% or more. A ratio W1/W2 of a mass W1 of the frame rib to a mass W2 of the inner rib is $0.2 \leq W1/W2 \leq 0.42$.

The current collector is also referred to as a grid. However, the skeleton of the current collector or the grid is not limited to a grid-like shape or a net-like shape.

The frame rib (more specifically, the portion excluding the lug portion of the frame rib) is generally quadrangular and may be rectangular. The quadrangle may be a quadrangle (for example, a trapezoid) in which at least one of angles formed by the upper element and the pair of side elements and angles formed by the lower element and the pair of side elements (four angles in total) is not 90 °C. At least one of the four corners of the quadrangle may be chamfered. The chamfering may be C-chamfering or R-chamfering. Usually, R-chamfering for rounding a corner is preferable.

When the frame rib is rectangular, the first direction is a direction parallel to the side element, and the second direction is a direction parallel to the upper element and the lower element. In a case of a flooded-type lead-acid battery in which the frame body is a quadrangle other than a rectangle, in a normal use state of the lead-acid battery, the first direction corresponds to the vertical direction, and the second direction corresponds to the horizontal direction. In a case of a valve regulated lead-acid battery in which the frame rib is a quadrangle other than a rectangle, in a normal use state of the lead-acid battery, the first direction corresponds to the vertical direction (or horizontal direction), and the second direction corresponds to the horizontal direction (or vertical direction).

The longitudinal rib may extend parallel to the side element or may extend in an oblique direction with respect to the side element. Furthermore, the longitudinal rib may have a linear shape, a curved shape, or some bending. That is, the longitudinal rib may extend so that the vector in the first direction is larger than the vector in the second direction.

The transverse rib may extend parallel to the upper element or the lower element or may extend in an oblique direction with respect to the upper element or the lower element. Furthermore, the transverse rib may have a linear shape, a curved shape, or some bending. That is, the transverse rib may extend so that the vector in the second direction is larger than the vector in the first direction.

A stripe pattern of a metallic fibrous structure is observed in a cross-section of the longitudinal rib which is perpendicular to the first direction, that is, a cross-section parallel to the upper element and parallel to the thickness direction (hereinafter, also referred to as a cross-section C). The peripheral region of the cross-section C includes the first portion in which the fibrous structure (stripe direction) extends along the contour of the cross-section C and the second portion other than the first portion. The contour of the cross-section C means a line corresponding to the outer surface of the longitudinal rib. The peripheral region of the cross-section C is a peripheral edge region along the contour of the cross-section C, and is a peripheral edge region having a depth of at least 55 $\mu$m or more, preferably 100 $\mu$m or more, from a line corresponding to the outer surface in the cross-section C. In the second portion of the cross-section C, the stripe pattern may not be observed, and the stripe pattern extending in the depth direction of the peripheral region may be observed.

In the lead-acid battery according to the above aspect of the present invention, the percentage R1 is set to 50% or more, and the ratio W1/W2 is controlled in a range of 0.2 or more and 0.42 or less. This makes it possible to secure excellent life performance after high-temperature overcharge. The reason why such an effect is obtained will be described more specifically hereinafter. The fact that the percentage R1 is 50% or more means that the percentage R2 is 50% or less.

As described above, when the percentage R1 or the percentage R2 is controlled, a cross-section perpendicular to the fiber length of the fibrous structure is less likely to be exposed on the outer surface of the peripheral region of the cross-section C. The cross-section perpendicular to the fiber length of the fibrous structure has many grain boundaries. The first portion and the second portion are different in the progress of corrosion.

In general, corrosion of the current collector preferentially proceeds in a cross-section perpendicular to the fiber length of the fibrous structure exposed on the outer surface. On the outer surface of the first portion of the peripheral region, a fibrous metal structure extends in the surface direction of the inner rib. That is, the crystal grain boundary extends longer in the surface direction of the inner rib than in the depth direction of the inner rib. Therefore, a corrosive layer formed in the first portion of the peripheral region is formed along the surface direction of the inner rib, and is hardly formed up to a deep position inside the inner rib. The corrosive layer formed along the outer surface of the first portion of the peripheral region has low joint strength with the current collector (inner rib). Therefore, when gas is generated at the interface between the current collector (the outer surface of the first portion in the peripheral region) and the corrosive layer, the corrosive layer is relatively easily peeled off from the current collector. As described above, in the first portion, stress associated with peeling of the corrosive layer is less likely to be applied to the current collector, so that elongation and deformation of the current collector are reduced.

On the other hand, on the outer surface of the second portion of the peripheral region, a fibrous metal structure extends in the depth direction of the inner rib. That is, the crystal grain boundary extends longer in the depth direction of the inner rib than in the surface direction of the inner rib. Therefore, in the second portion, the corrosion of the longitudinal rib tends to progress to a deep wedge-like shape, and the elongation of the current collector due to the deep corrosion tends to increase. Therefore, the corrosive layer formed along the outer surface of the second portion of the peripheral region has high joint strength with the current collector (inner rib). In the second portion, even when gas is generated at the interface between the current collector and the corrosive layer, the corrosive layer is less likely to be peeled off from the current collector. Therefore, stress associated with gas generation is applied to the inner rib, and the current collector is likely to elongate or deform. In particular, when an overcharge test is performed at a high temperature (for example, a temperature of 60 °C or higher), corrosion of the current collector is more likely to proceed, and in addition, gas generation becomes remarkable, so that the influence of the stress that the second portion receives from the corrosive layer is likely to become apparent. Therefore, even when the corrosion amount is the same, as the percentage R1 is larger, the elongation and deformation of the current collector are suppressed, and the falling off of the electrode material is suppressed.

A stripe pattern of a metallic fibrous structure is hardly observed in a cross-section perpendicular to the second direction of the transverse rib of the current collector, that is, a cross-section parallel to the side element and parallel to the thickness direction (hereinafter, also referred to as a cross-section G), and in general, a cross-section perpendicular to the fiber length of the fibrous structure is observed. In general, substantially the entire circumference of the peripheral region of the cross-section G corresponds to the second portion in the cross-section C. That is, substantially the entire circumference of the peripheral region of the cross-section G is composed of a fibrous structure extending in the second direction. Therefore, in the peripheral region of the cross-section G, the elongation or deformation of the current collector is suppressed even when the corrosion amount is the same.

By controlling the ratio W1/W2, the binding force of the electrode material can be easily secured, and the deformation of the inner rib can be suppressed to some extent. However, due to the difference in the progress of corrosion between the first portion and the second portion as described above, a large difference occurs in the degree of deformation of the current collector even when the corrosion amount is the same. As a result, the current collector may elongate in one direction, or the current collector may distort and bend due to the variation of the stress applied to the current collector. In particular, in a high-temperature overcharge test, deformation (elongation, curvature, etc.) of the current collector becomes remarkable. According to the above aspect of the present invention, the ratio W1/W2 is controlled in a range of 0.2 or more and 0.42 or less, and the percentage R1 is set to 50% or more. Accordingly, even when high-temperature overcharge is performed, deformation itself due to stress of the corrosive layer is reduced. Moreover, the degree of progress of corrosion can be made more uniform in the entire inner rib, uneven distribution of the corrosive layer is suppressed, and elongation or deformation of the current collector is suppressed. Furthermore, since the discharge reaction can more uniformly proceed from the initial stage, even after charge-discharge is repeated, a decrease in adhesion between the current collector and the electrode material is suppressed. As a result, falling off of the electrode material is suppressed, so that excellent life performance after high-temperature overcharge can be secured.

The percentage R1 of the first portion may be 50% or more. When the percentage R1 is 50% or more, the effect of suppressing the height elongation of the current collector is enhanced. From the viewpoint of enhancing the effect of suppressing the width elongation of the current collector, the percentage R1 is preferably 60% or more or 70% or more, and may be 75% or more or 80% or more. The percentage R1 is preferably less than 100%, and more preferably 95% or less or 90% or less. When the percentage R1 becomes 100%, the degree of progress of corrosion becomes uniform over the entire circumference of the inner rib, but when the percentage R1 exceeds 95%, for example, the percentage to the initial capacity after charge-discharge of the capacity by the five-hour rate current tends to decrease significantly. For example, the percentage to the initial capacity of the capacity obtained by discharge before and after five cycles may decrease to less than 70%. On the other hand, when the percentage R1 is 95% or less, the percentage to the initial capacity of the capacity before and after five cycles can be 75% or more or 80% or more.

When charge-discharge cycle at the five-hour rate current is repeated, expansion and contraction of the electrode material are repeated, and the interface between the current collector and the electrode material is likely to be physically peeled off. This is considered to be a cause of the decrease in the percentage to the initial capacity. It is considered that the first portion is likely to form a shallow layered corrosive layer, and the second portion generates a deep wedge-like corrosive layer. Therefore, the binding force between the current collector and the electrode material is higher in the second portion than in the first portion. From the viewpoint of improving the binding force between the current collector and the electrode material, the percentage R2 of the second portion is preferably 5% or more, and more preferably 10% or more.

The percentages R1 and R2 can be controlled intentionally. In the longitudinal rib, even when the percentage R2 is originally large, it is also possible to deform the longitudinal rib so as to crush the second portion. For example, when the longitudinal rib is deformed by press working, the percentage R1 can be arbitrarily controlled by the speed of the press, the press pressure, the mold shape, and the like. That is, deforming the longitudinal rib by press working is not a sufficient condition for increasing the percentage R1, and it is necessary to appropriately control the conditions of press working.

The shape of the cross-section C of the longitudinal rib is not particularly limited, but is preferably an octagonal shape. When the cross-section C is an octagon, the internal angle of the vertex is not too small, and the effect of suppressing corrosion near the vertex is easily enhanced. In order to form the longitudinal rib having an octagonal cross-section C, for example, a longitudinal rib having a rectangular cross-section C may be deformed. The method for deforming the longitudinal rib is not particularly limited, but for example, the inner rib of the current collector may be pressed. At that time, the pressing condition of the inner rib may be appropriately selected so that the percentage R1 of the first portion falls within a predetermined range. When the shape of the cross-section C is octagonal, the percentage R1 can be easily controlled to 50% or more. The octagon may not be a strict octagon in a mathematical sense, and the vertex may be slightly rounded or each side may be slightly bent.

The above aspect of the present invention is useful when a punched current collector is used as the current collector. As the punched current collector, a punched current collector of a stretched sheet of lead or a lead alloy is preferable. Since the stretched sheet easily produces a stripe pattern of a metallic fibrous structure, the percentage of the second portion can be easily adjusted.

In the first portion, the fibrous structure (stripe direction) extending along the contour of the peripheral region of the cross-section C refers to the following state. First, the inside of the frame rib of the current collector is cut into three equal parts of an upper region on the upper element side of the frame rib, a lower region on the lower element side of the frame rib, and a middle region between the upper region and the lower region. At this time, in the plurality of longitudinal ribs, four rows of cross-sections C perpendicular to the first direction (parallel to the upper element and parallel to the thickness direction) are formed. That is, one row of cross-sections C is formed in each of the upper region and the lower region, and two rows of cross-sections C are formed in the middle region. When the division line of the three equal parts corresponds to the intersection portion (node) between the longitudinal rib and the transverse rib, the current collector may be divided into three parts by moving the division line entirely or partially slightly so that the cross-section C is formed in the longitudinal rib portion between the intersection portions as much as possible. When the inside of the frame rib of the current collector is divided into three parts, the dimension of the lug or the foot is not considered.

Next, a plurality of cross-sections C to be observed (60% or more of the cross-sections C included in the two rows) are selected from any two rows among the four rows. In the peripheral region of the selected cross-section C, a portion where the stripe of the fibrous structure has an angle of less than 45 ° with the contour of the cross-section C with reference to the horizontal plane in the first direction from the side element is the first portion. The portion other than the first portion is the second portion. Specifically, at an arbitrary point P on the contour of each cross-section C, a tangent line S1 of the point P is drawn, and a perpendicular line L of the tangent line S1 is further drawn so as to pass through the point P. Next, a tangent line S2 of a stripe that exists at a depth of 55 $\mu$m from the point P on the perpendicular line L and intersects with the perpendicular line L is drawn at the intersection. When an angle $\theta$ between the tangent line S2 and the tangent line S1 is less than 45 °, the point P forms a contour corresponding to the first portion. When the angle $\theta$ is 45 ° or more, the point P constitutes a contour corresponding to the second portion. Even when it cannot be determined whether or not the point P constitutes the contour corresponding to the first portion due to the reason that the fibrous structure cannot be observed, the point P constitutes the contour of the second portion. In all the selected cross-sections C, the percentage of the length of the contour corresponding to the first portion to the total length of the contour of the cross-section C is determined and averaged to calculate the percentage R1. The percentage R2 (%) of the second portion is a value obtained by subtracting the average value of the percentage R1 (%) of the first portion from 100. In a case where the cut portion is an intersection portion (node) between the longitudinal rib and the transverse rib, an average may be obtained by excluding the cross-section, and the cutting position of the longitudinal rib may be shifted so that the node is deviated.

When the cross-section C is formed, the prepared current collector is embedded in a thermosetting resin so as to be entirely covered, the resin is cured, and then the current collector is cut together with the cured resin. The state of the metal structure of the cross-section C is photographed and observed with a microscope after etching the cross-section of the current collector. As the current collector, a current collector obtained by taking out from a disassembled lead-acid battery in a full charge state is used.

The current collector can be taken out from the battery by the following procedure. First, an electrode plate (such as a positive electrode plate) taken out by disassembling a lead-acid battery in a full charge state is washed with water to remove an electrolyte solution containing sulfuric acid, and dried. Thereafter, most of the electrode material is scraped off from the electrode plate. The remaining positive electrode material adhering to the surface of the current collector is removed using an aqueous solution containing mannitol. The current collector from which the electrode material has been removed is washed with water and dried to prepare a current collector for measurement.

In the present specification, the full charge state of the flooded-type lead-acid battery is defined by the definition of JIS D 5301: 2006. More specifically, a state in which the lead-acid battery is charged in a water bath at 25 °C $\pm$ 2 °C with a current (A) which is 0.2 times as large as the numerical value described as the rated capacity (Ah) until the terminal voltage during charging measured every 15 minutes or the electrolyte density temperature-corrected to 20 °C exhibits a constant value at three significant digits continuously three times is defined as a full charge state. Meanwhile, in the case of a valve regulated lead-acid battery, the full charge state is a state in which the lead-acid battery is charged in an air bath at 25 °C $\pm$ 2 °C at a constant current constant voltage charge of 2.23 V/cell with a current (A) which is 0.2 times as large as the numerical value described as the rated capacity (Ah), and charging is terminated at the time when the charge current (A) during the constant voltage charging becomes 0.005 times as large as the numerical value described as the rated capacity (Ah). The numerical value described as the rated capacity is a numerical value in which the unit is Ah. The unit of the current set based on the numerical value described as the rated capacity is A.

A lead-acid battery in a full charge state refers to a fully charged lead-acid battery already formed. The full charge of the lead-acid battery may be performed immediately after formation or after a lapse of time from formation (for example, the lead-acid battery in use (preferably at the initial stage of use) after formation may be fully charged) as long as it is after formation. The battery at the initial stage of use refers to a battery that has not been so long since the start of use and has hardly deteriorated.

The mass W1 of the frame rib and the mass W2 of the inner rib are each measured for the current collector taken out from the lead-acid battery in a full charge state. Prior to the measurement of W1 and W2, the current collector prepared for measurement is separated into the frame rib and the inner rib by cutting a boundary portion between the frame rib and the inner rib.

In the cross-section C, the thickness (in other words, the thickness of the fibrous structure) of the first portion may be 55 $\mu$m or more. Moreover, even in the peripheral region that looks like the first portion at a glance, when the thickness of the region where the stripe pattern of the fibrous structure is observed is less than 55 $\mu$m, it is regarded as not the first portion but the second portion. The first portion having a thickness of 55 $\mu$m or more has a sufficient action of suppressing intrusion of corrosion into the inner rib. In this case, the penetration of the corrosion into the inner side is likely to be highly uniform over the entire inner rib. Therefore, elongation and distortion of the current collector are remarkably suppressed, and falling off of the electrode material is also remarkably suppressed. The thickness of the first portion is preferably 100 μm or more from the viewpoint of further suppressing intrusion of corrosion of the longitudinal rib into the inside.

The thickness of the first portion in the cross-section C may be measured as follows. First, a tangent line S1 is drawn at an arbitrary point P1 on the contour of the first portion, and a perpendicular line L of the tangent line S1 is drawn so as to pass through the point P1. Next, at a point Px moving from the point P1 to a depth of X μm on the perpendicular line L, a tangent line S2 of a stripe intersecting with the perpendicular line L is continuously drawn. At this time, when the angle between the tangent line S 1 and the tangent line S2 is continuously 45 ° or less, it can be said that the thickness of the first portion immediately below the point P1 is X μm or more.

The thickness of the inner rib may be, for example, 0.7 mm to 3 mm. The rib width of the inner rib may be, for example, 0.7 mm to 3 mm.

When the current collector is a punched current collector of a stretched sheet of lead or a lead alloy, a total length WLW of inner dimensions of the transverse rib and a total length WLH of inner dimensions of the longitudinal rib may satisfy WLH/WLW ≥ 0.8 or WLH/WLW ≥ 1.3. In this case, the intrusion of corrosion of the current collector into the inside tends to proceed, and thus the suppression of the elongation and distortion of the current collector becomes more remarkable by controlling the percentage R2 to less than 50%. Here, the inner dimension of each inner rib means a length in the inner dimension of the grid square, that is, a length (crosspiece length) of a side of a rectangular space that defines the grid square. Usually, the direction of the length WLW (the direction in which the transverse rib elongates) corresponds to the stretching direction (machine direction (MD)) of the stretched sheet.

When the current collector is a punched current collector of a stretched sheet of lead or a lead alloy, the total length WLW of the inner dimensions of the transverse rib and the total length WLH of the inner dimensions of the longitudinal rib may satisfy WLH/WLW ≤ 1.96.

When the current collector is applied to the positive electrode plate, the above-mentioned effect is remarkably exhibited, but the present invention is not limited to this case. The current collector may be applied to the negative electrode plate. From the viewpoint of suppressing elongation due to corrosion of the current collector, the current collector is preferably used for at least the positive electrode plate. When the lead-acid battery includes a plurality of positive electrode plates, the current collector may be used for some of the positive electrode plates, or the current collector may be used for all of the positive electrode plates. Similarly, when the lead-acid battery includes a plurality of negative electrode plates, the current collector may be used for at least some of the negative electrode plates, or the current collector may be used for all of the negative electrode plates.

The current collector can be manufactured by a manufacturing method including pressing an intermediate rib which is a precursor of an inner rib. Such a manufacturing method includes, for example, the steps of: (i) preparing a rolled plate; (ii) forming an intermediate grid having a plurality of intermediate ribs formed in a grid-like shape by performing punching on the rolled plate; (iii) forming at least a part of inner ribs by performing pressing on the intermediate grid from a thickness direction of the intermediate grid; and (iv) adjusting a distribution state of the mass such that ratio W1/W2 in the current collector satisfies 0.2 ≤ W1/W2 ≤ 0.42. Here, the pressing includes deforming at least a part of the plurality of intermediate ribs such that at least one end portion in the rib width direction is thinner than a central portion in the rib width direction intersecting with (for example, orthogonal to the stretching direction) the extending direction of the intermediate ribs, and the percentage R1 falls within the above range.

In the step (iv), for example, in at least one of the rolled plate and the intermediate grid, the distribution state of the mass is adjusted such that W1/W2 in the current collector falls within the above range. In the rolled plate, for example, the distribution state of the mass can be adjusted by adjusting the thicknesses of the portion corresponding to the inner rib and the portion corresponding to the frame rib. In the intermediate grid, for example, the distribution state of the mass can be adjusted by adjusting the percentage between the portion where the rolled plate is removed by punching and the remaining portion. Both of these may be combined as necessary.

Hereinafter, embodiments of the present invention will be described for each main constituent element with reference to the drawings, but the present invention is not limited to the following embodiments.

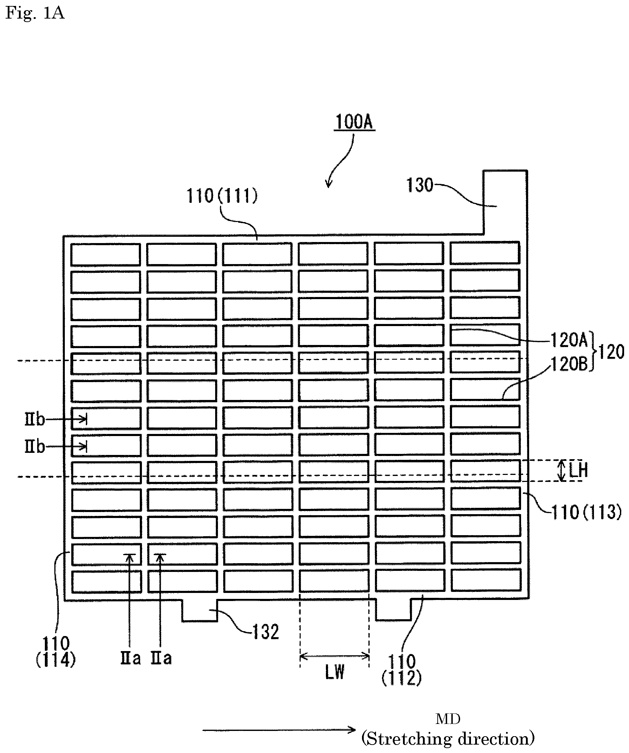

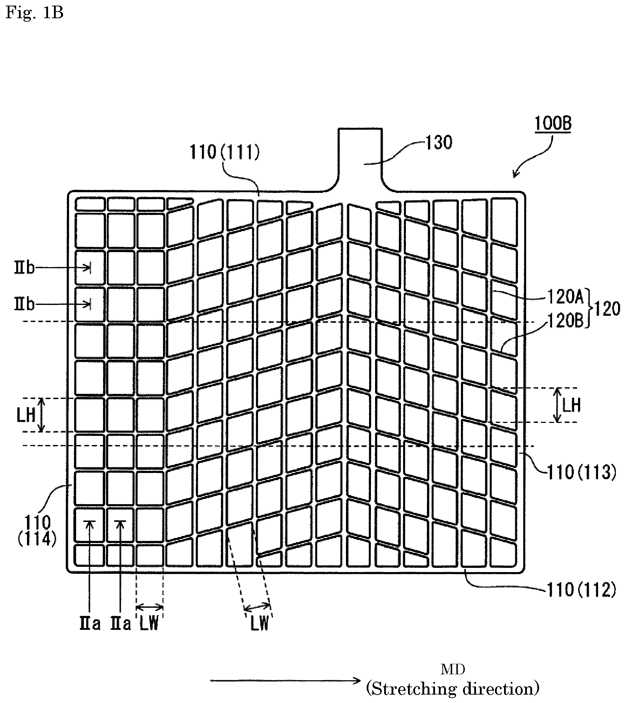

Figs. 1A and 1B are plan views showing appearances of current collectors 100A and 100B according to one embodiment and another embodiment of the present invention, respectively. Each of the current collectors 100A and 100B has a frame rib 110 and a net-like inner rib 120 inside the frame rib 110. The frame rib 110 includes a lug 130, an upper element 111 continuous with the lug 130, a lower element 112 opposite to the upper element 111, and a pair of side elements 113 and 114 connecting the upper element 111 and the lower element 112. Broken lines indicate the boundaries dividing the inner ribs into three equal parts of an upper region, a middle region, and a lower region. The current collector 100A of Fig. 1A has a lower protrusion (also referred to as a foot portion) 132 that is continuous with the lower element 112. In the current collector 100B of Fig. 1B, a transverse rib extends in an oblique direction with respect to the upper element or the lower element. LH represents an inner dimension per grid of a longitudinal rib, and LW represents an inner dimension per grid of the transverse rib.

The current collectors 100A and 100B are, for example, punched grid bodies of a stretched sheet of lead or a lead alloy, and the stretching direction is a direction indicated by an arrow MD in Fig. 1. A cross-section C of a longitudinal rib 120A is a cross-section taken along line IIa-IIa in Fig. 1, and a cross-section G of a transverse rib 120B is a cross-section taken along line IIb-IIb. The metal structure of the stretched sheet easily forms a layered or fibrous structure extending in the stretching direction. Therefore, a stripe pattern is generated in the cross-section C. On the other hand, a pattern due to cutting of a layered or fibrous structure may be generated in the cross-section G.

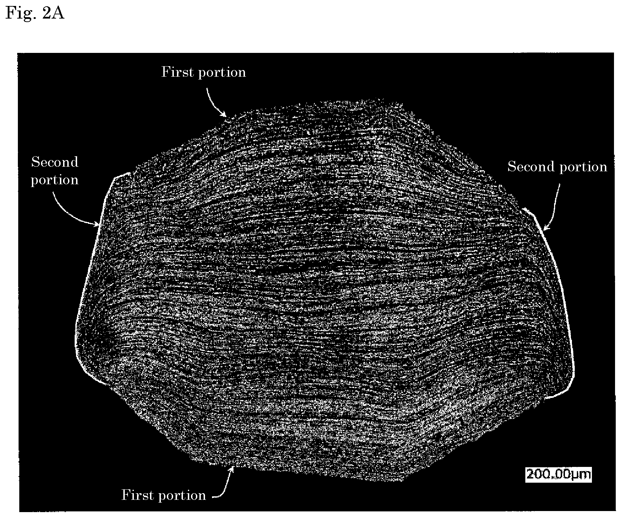

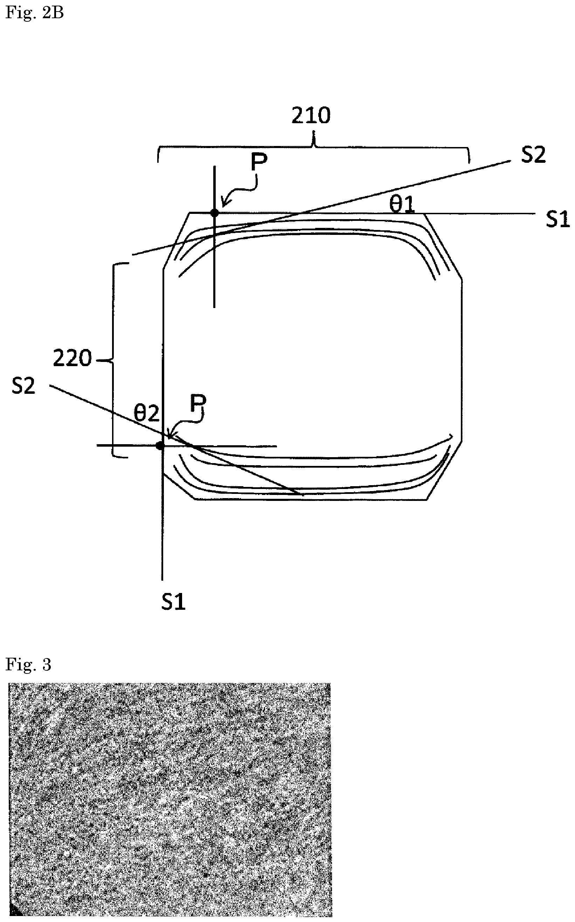

Fig. 2A is an example of a photograph of the cross-section C of the longitudinal rib 120A, and the cross-section has an octagonal shape, and a stripe pattern of a metal fibrous structure is seen. Fig. 2B is a conceptual diagram of an example of the octagonal cross-section C imitating Fig. 2A. On the other hand, Fig. 3 is an example of a photograph of the cross-section G of the transverse rib 120B, and a pattern by a cross-section perpendicular to a fiber length of a metal fibrous structure can be seen in the cross-section. In Fig. 2B, most of the left and right sides of the octagonal cross-section C are second portions 220, and the other peripheral regions are first portions 210. In the first portion 210, a stripe (tangent line S2) of a fibrous structure has an angle $\theta1$ of less than 45 ° with respect to the contour (line S1) of the cross-section C. On the other hand, in the second portion 220, a stripe of a fibrous structure cannot be confirmed, or a stripe (tangent line S2) has an angle $\theta2$ exceeding 45 ° with respect to the contour (line S1) of the cross-section C. In Fig. 2A, there is a region where a stripe pattern of a fibrous structure having a thickness of less than about 55 $\mu$m is observed in the outermost layer of the second portion 220, but such a thin portion does not constitute the first portion 210.

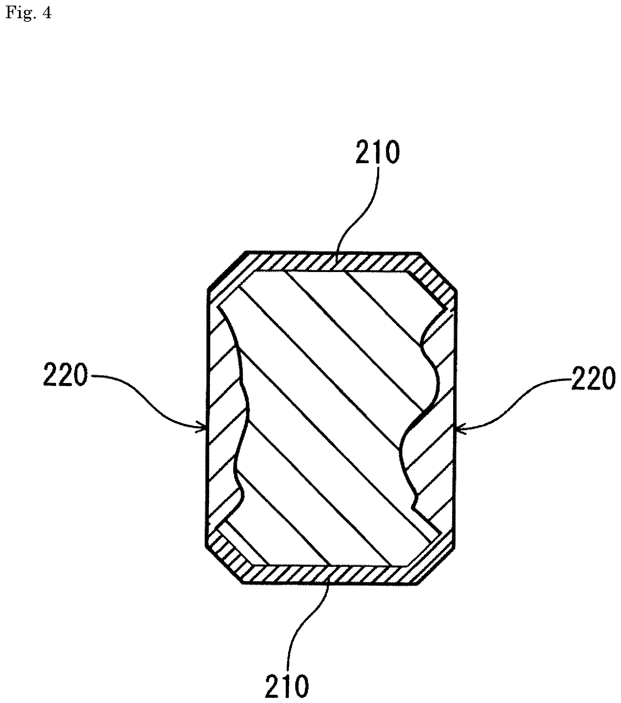

Fig. 4 is a conceptual diagram of the cross-section C showing a progress state of corrosion of the inner rib. The portion where a shallow corrosive layer is formed is the first portion where the fibrous structure extends along the contour of the cross-section C, and the corrosive layer is hardly formed deep even if corrosion progresses. Accordingly, peeling tends to easily occur in the vicinity of the interface between the current collector and an electrode material. Therefore, it is considered that the stress that the current collector intends to deform is easily relaxed. On the other hand, the portion where a wedge-shaped deep corrosive layer is formed is the second portion. When the deep corrosive layer is formed, the current collector is likely to be unevenly deformed, the current collector elongates, and the electrode material is likely to fall off.

(Positive electrode plate)

A positive electrode plate for a lead-acid battery includes the above-described current collector and a positive electrode material held by the current collector (positive electrode current collector). As the positive electrode plate, what is called a paste-type positive electrode plate is used. The positive electrode material is obtained by removing the positive electrode current collector from the positive electrode plate. A member such as a mat or pasting paper may be bonded to the positive electrode plate. Such a member (bonding member) is used integrally with the positive electrode plate, and therefore is included in the positive electrode plate. When the positive electrode plate includes such a member, the positive electrode material is obtained by removing the positive electrode current collector and the bonding member. However, when a bonding member such as a mat is bonded to a separator, the thickness of the bonding member is included in the thickness of the separator.

As described above, the positive electrode current collector is preferably a punched current collector. As described above, the current collector includes the frame rib and the inner rib inside the frame rib. As the current collector, a grid-like current collector (positive electrode grid) is preferable. In the positive electrode grid, a portion corresponding to the inner rib has a grid-like shape (including a net-like shape). By using the positive electrode grid, the positive electrode material can be easily carried. The frame rib is preferably rectangular. Note that the rectangle may not be a strict rectangle, and a vertex may be slightly rounded or each side may be slightly bent.

The positive electrode current collector can be formed by press punching a sheet of lead or a lead alloy. The sheet is preferably a stretched sheet (also referred to as a rolled plate) subjected to stretching processing. The stretched sheet may be a uniaxially stretched sheet or a biaxially stretched sheet.

The lead alloy used for the positive electrode current collector is preferably a Pb-Sb-based alloy, a Pb-Ca-based alloy, a Pb-Ca-Sn-based alloy, or a Pb-Sn-based alloy in terms of corrosion resistance and mechanical strength. In the positive electrode current collector, lead having a purity of threenine or more (purity of 99.9 mass% or more) may be used. The positive electrode current collector may include a surface layer. Lead alloy layers (surface layers) having different compositions may be provided, and a plurality of alloy layers may be provided. The surface layer and the inner layer of the positive electrode current collector may have different compositions. The surface layer may be formed on a part of the positive electrode current collector. The surface layer may be formed only in a grid portion of the positive electrode current collector or only in a frame portion (only the lug portion, only the frame rib portion other than the lug, and the like).

The positive electrode material contains a positive active material (lead dioxide or lead sulfate) that develops capacity by oxidation-reductive reaction. The positive electrode material may contain an additive as necessary.

The unformed paste-type positive electrode plate is obtained by filling a positive electrode current collector with a positive electrode paste, and curing and drying the paste. The positive electrode paste is prepared by mixing a lead powder, an additive, water, and sulfuric acid. Thereafter, these unformed positive electrode plates are formed to obtain a positive electrode plate. Formation can be performed by charging an electrode group including an unformed positive electrode plate immersed in an electrolyte solution containing sulfuric acid in a container of a lead-acid battery. However, the formation may be performed before the assembly of the lead-acid battery or the electrode group.

(Negative electrode plate)

A negative electrode plate of a lead-acid battery includes a current collector and a negative electrode material. The negative electrode material is obtained by removing the negative electrode current collector from the negative electrode plate. A member such as a mat or pasting paper may be bonded to the negative electrode plate. Such a member (bonding member) is used integrally with the negative electrode plate, and therefore is included in the negative electrode plate. When the negative electrode plate includes such a member, the negative electrode material is obtained by removing the negative electrode current collector and the bonding member.

The negative electrode current collector may be formed by casting lead (Pb) or a lead alloy, or may be formed by processing a sheet of lead or a lead alloy. Examples of the processing method include expand and punching. It is preferable to use a grid-like current collector (negative electrode grid) as the negative electrode current collector because it is easy to carry the negative electrode material. As the negative electrode current collector, a current collector as described for the positive electrode current collector may be used.

The lead alloy used for the negative electrode current collector may be any of a Pb-Sb-based alloy, a Pb-Ca-based alloy, and a Pb-Ca-Sn-based alloy. These lead or lead alloys may further contain at least one selected from the group consisting of Ba, Ag, Al, Bi, As, Se, Cu, and the like as an additive element. The negative electrode current collector may include a surface layer. The surface layer and the inner layer of the negative electrode current collector may have different compositions. The surface layer may be formed on a part of the negative electrode current collector. The surface layer may be formed on a lug of the negative electrode current collector. The surface layer of the lug may contain Sn or a Sn alloy.

The negative electrode material contains, as an essential component, a negative active material (lead or lead sulfate) that develops capacity by oxidation-reductive reaction, and may contain an additive (organic expander, carbonaceous material, barium sulfate, etc.). The negative active material in a charged state is spongy lead, but the unformed negative electrode plate is usually prepared using lead powder.

As the organic expander, at least one of lignins and a synthetic organic expander may be used. Examples of the lignins include lignin and a lignin derivative. Examples of the lignin derivative include lignin sulfonic acid and salts thereof (alkali metal salts (sodium salts and the like) and the like). The synthetic organic expander is an organic polymer containing a sulfur element, and generally contains a plurality of aromatic rings in the molecule and a sulfur element as a sulfur-containing group. Among the sulfur-containing group, a sulfonic acid group or a sulfonyl group, which is in a stable form, is preferable. The sulfonic acid group may exist in an acid form, or may exist in a salt form like a Na salt.

As a specific example of the organic expander, a condensate of a compound having a sulfur-containing group and an aromatic ring with an aldehyde compound (aldehyde or condensate thereof, such as formaldehyde) is preferable. Examples of the aromatic ring include a benzene ring and a naphthalene ring. When the compound having an aromatic ring has a plurality of aromatic rings, the plurality of aromatic rings may be linked by a direct bond, a linking group (for example, an alkylene group, a sulfone group, or the like), or the like. Examples of such a structure include biphenyl, bisphenylalkane, and bisphenylsulfone. Examples of the compound having an aromatic ring include compounds having the above-mentioned aromatic ring and a hydroxy group and/or an amino group. The hydroxy group or the amino group may be directly bonded to the aromatic ring, or may be bonded as an alkyl chain having a hydroxy group or an amino group. The compound having an aromatic ring is preferably a bisphenol compound, a hydroxybiphenyl compound, a hydroxynaphthalene compound, a phenol compound, or the like. The compound having an aromatic ring may further have a substituent. The organic expander may contain one or more residues of these compounds. As the bisphenol compound, bisphenol A, bisphenol S, bisphenol F, and the like are preferable.

The sulfur-containing group may be directly bonded to the aromatic ring contained in the compound, or for example, may be bonded to the aromatic ring as an alkyl chain having a sulfur-containing group.

Moreover, for example, a condensate of the above-mentioned compound having an aromatic ring and a monocyclic aromatic compound (aminobenzenesulfonic acid, alkylaminobenzenesulfonic acid, phenolsulfonic acid, or a substitution product thereof, or the like) with an aldehyde compound may be used as the organic expander.

The content of the organic expander contained in the negative electrode material is, for example, 0.01 mass% or more, and may be 0.02 mass% or more or 0.05 mass% or more. On the other hand, the content of the organic expander is, for example, 1.0 mass% or less, and may be 0.8 mass% or less or 0.5 mass% or less. The lower limit value and the upper limit value can be arbitrarily combined. Here, the content of the organic expander contained in the negative electrode material is a content in a negative electrode material collected from a formed lead-acid battery in a full charge state by a method described later.

As the carbonaceous material contained in the negative electrode material, carbon black, graphite, hard carbon, soft carbon, or the like can be used. Examples of the carbon black include acetylene black, furnace black, and lamp black. The furnace black also includes ketjen black (trade name). The graphite may be any carbon material including a graphite-type crystal structure, and may be either artificial graphite or natural graphite.

The content of the carbonaceous material in the negative electrode material is, for example, 0.05 mass% or more, and may be 0.2 mass% or more. The content of the carbonaceous material is, for example, 4.0 mass% or less, and may be 3 mass% or less or 2 mass% or less. The lower limit value and the upper limit value can be arbitrarily combined.

The content of barium sulfate in the negative electrode material is, for example, 0.5 mass% or more, and may be 1 mass% or more or 1.3 mass% or more. The content of barium sulfate is, for example, 3.0 mass% or less, and may be 2.5 mass% or less or 2 mass% or less. The lower limit value and the upper limit value can be arbitrarily combined.

Hereinafter, a method for quantifying the amount of the organic expander, the carbonaceous material, and barium sulfate contained in the negative electrode material will be described. Prior to quantitative analysis, the formed lead-acid battery is fully charged and then disassembled to obtain a negative electrode plate to be analyzed. The obtained negative electrode plate is washed with water to remove the sulfuric acid component from the negative electrode plate. The washing with water is performed until it is confirmed that the color of a pH test paper does not change when pressing the test paper against the surface of the negative electrode plate washed with water. However, the time for performing the washing with water is within two hours. The negative electrode plate washed with water is dried at $60 \pm 5$ °C for about six hours under a reduced pressure environment. When the negative electrode plate includes the bonding member after drying, the bonding member is removed from the negative electrode plate by peeling. Next, the negative electrode material is separated from the negative electrode plate to obtain a sample (hereinafter, referred to as a sample A). The sample A is pulverized as necessary.

< < Quantitative determination of organic expander > >

The pulverized sample A is immersed in a 1 mol/L NaOH aqueous solution to extract an organic expander. Insoluble components are removed from the extracted aqueous NaOH solution containing the organic expander by filtration. The obtained filtrate (hereinafter, also referred to as filtrate B) is desalted, then concentrated, and dried to obtain an organic expander powder (hereinafter, also referred to as a sample C). The desalination is performed by using a desalting column, by passing the filtrate B through an ion-exchange membrane, or by placing the filtrate B in a dialysis tube and immersing it in distilled water.

An organic expander is specified by combining information obtained from an infrared spectroscopic spectrum of the sample C, an ultraviolet-visible absorption spectrum of a solution obtained by dissolving the sample C in distilled water or the like, an NMR spectrum of a solution obtained by dissolving the sample C in a solvent such as heavy water, pyrolysis GC-MS capable of obtaining information on individual compounds constituting a substance, or the like.

The ultraviolet-visible absorption spectrum of the filtrate B is measured. The content of the organic expander in the negative electrode material is quantified using the spectral intensity and a calibration curve prepared in advance. When the structural formula of the organic expander to be analyzed cannot be exactly specified and a calibration curve of the same organic expander cannot be used, a calibration curve is prepared using an available organic expander showing an ultraviolet-visible absorption spectrum, an infrared spectrum, an NMR spectrum, and the like similar to those of the organic expander to be analyzed.

< < Quantitative determination of carbonaceous material and barium sulfate > >

To 10 g of the pulverized sample A, 50 mL of nitric acid having a concentration of 20 mass% is added and heated for about 20 minutes to dissolve the lead component as lead nitrate. Next, a solution containing lead nitrate is filtered, and a solid content such as a carbonaceous material and barium sulfate is separated by filtration.

The obtained solid content is dispersed in water to form a dispersion, and then components (for example, a reinforcing material) other than the carbonaceous material and barium sulfate are removed from the dispersion using a sieve. Next, the dispersion is subjected to suction filtration using a membrane filter whose mass has been measured in advance, and the membrane filter is dried together with the filtered sample by a dryer at $110$ °C $\pm 5$ °C. The obtained sample is a mixed sample of the carbonaceous material and barium sulfate (hereinafter, also referred to as a sample D). The mass ($M_m$) of the sample D is measured by subtracting the mass of the membrane filter from the total mass of the sample D and the membrane filter after drying. Thereafter, the dried sample D is placed in a crucible together with the membrane filter and burned and ashed at $700$ °C or higher. The residue remaining is barium oxide. The mass ($M_B$) of barium sulfate is determined by converting the mass of barium oxide into the mass of barium sulfate. The mass of the carbonaceous material is calculated by subtracting the mass $M_B$ from the mass $M_m$.

The negative electrode plate can be formed by filling a negative electrode current collector with a negative electrode paste, curing and drying the paste to prepare an unformed negative electrode plate, and then forming the unformed negative electrode plate. The negative electrode paste is prepared by adding water and sulfuric acid to a lead powder and various additives and mixing the mixture. In the curing step, the unformed negative electrode plate is preferably cured at room temperature or at a higher temperature and a higher humidity.

Formation can be performed by charging an electrode group including an unformed negative electrode plate immersed in an electrolyte solution containing sulfuric acid in a container of a lead-acid battery. However, the formation may be performed before the assembly of the lead-acid battery or the electrode group. Spongy lead is generated by formation.

(Separator)

A separator is usually disposed between the negative electrode plate and the positive electrode plate. As the separator, a nonwoven fabric, a microporous membrane, or the like is used. The thickness of the separator interposed between the negative electrode plate and the positive electrode plate may be selected according to the inter-electrode distance. The number of separators may be selected according to the number of gaps.

The nonwoven fabric is a mat in which fibers are entangled without being woven, and is mainly composed of fibers. In the nonwoven fabric, for example, 60 mass% or more of the nonwoven fabric is formed of fibers. As the fibers, glass fibers, polymer fibers (polyolefin fibers, acrylic fibers, polyester fibers (polyethylene terephthalate fibers or the like), or the like), pulp fibers, or the like can be used. Among them, glass fibers are preferable. The nonwoven fabric may contain components other than fibers, for example, an acid-resistant inorganic powder and a polymer as a binder.

Meanwhile, the microporous membrane is a porous sheet mainly containing components other than a fiber component, and is obtained, for example, by extruding a composition containing a pore-forming additive (at least one of a polymer powder and oil) into a sheet shape, and then removing the pore-forming additive to form pores. The microporous membrane is preferably composed of a material having acid resistance, and is preferably composed mainly of a polymer component. As the polymer component, polyolefin (polyethylene, polypropylene, etc.) is preferable.

The separator may be made of, for example, only a nonwoven fabric or only a microporous membrane. Moreover, the separator may be a layered product of a nonwoven fabric and a microporous membrane, a product obtained by bonding different or the same kind of materials, a product obtained by meshing irregularities in different or the same kind of materials, or the like, as necessary.

The separator may have a sheet shape or a bag shape. The separator may be disposed so as to sandwich one sheet-shaped separator between the positive electrode plate and the negative electrode plate. Further, the plate may be disposed so as to be sandwiched between one sheet-shaped separator in a bent state. In this case, the positive electrode plate sandwiched between the bent sheet-shaped separator and the negative electrode plate sandwiched between the bent sheet-shaped separator may be overlapped, or one of the positive electrode plate and the negative electrode plate may be sandwiched between the bent sheet-shaped separator and overlapped with the other plate. The sheet-shaped separator may be bent in a bellows shape, and the positive electrode plate and the negative electrode plate may be sandwiched between the bellows-shaped separator such that the separator is interposed therebetween. When the separator bent in a bellows shape is used, the separator may be disposed such that the bent portion is along the horizontal direction of the lead-acid battery (for example, such that the bent portion is parallel to the horizontal direction), or the separator may be disposed such that the bent portion is along the vertical direction (for example, such that the bent portion is parallel to the vertical direction). In the separator bent in a bellows shape, recessed portions are alternately formed on both main surface sides of the separator. Since the lug is formed on each of the upper portions of the positive electrode plate and the negative electrode plate, when the separator is disposed such that the bent portion is along the horizontal direction of the lead-acid battery, the positive electrode plate and the negative electrode plate are disposed only in the recessed portion on one main surface side of the separator (that is, the separator is doubly interposed between the adjacent positive electrode plate and negative electrode plate). When the separator is disposed such that the bent portion is along the vertical direction of the lead-acid battery, the positive electrode plate can be housed in the recessed portion on one main surface side, and the negative electrode plate can be housed in the recessed portion on the other main surface side (that is, the separator can be interposed singly between the adjacent positive electrode plate and negative electrode plate). When the bag-shaped separator is used, the bag-shaped separator may house the positive electrode plate or the negative electrode plate.

In the present specification, in the plate, an up-down direction is defined with a side on which the lug is provided as an upper side and a side opposite to the lug as a lower side. The up-down direction of the plate may be the same as or different from the up-down direction of the lead-acid battery in the vertical direction. That is, the lead-acid battery may be placed vertically or horizontally.

(Electrolyte solution)

The electrolyte solution is an aqueous solution containing sulfuric acid, and may be gelled as necessary.

The electrolyte solution may contain cations (for example, metal cations (at least one selected from sodium ion, lithium ion, magnesium ion, and aluminum ion, and the like)) and anions (for example, anions other than sulfate anions (phosphate ions, etc.)) as necessary.

The specific gravity of the electrolyte solution at 20 °C in the lead-acid battery in a full charge state is, for example, 1.20 or more, and may be 1.25 or more. The specific gravity of the electrolyte solution at 20 °C in the lead-acid battery in a full charge state is, for example, 1.35 or less, and may be 1.32 or less. The lower limit value and the upper limit value can be arbitrarily combined.

The lead-acid battery including the positive electrode plate containing the current collector can be manufactured by a manufacturing method including, for example, a step of preparing the current collector and a step of obtaining the positive electrode plate containing the current collector and the positive electrode material. In the step of preparing the current collector, the current collector is prepared by the above-described method for manufacturing the current collector. More specifically, the current collector is prepared by, for example, a manufacturing method including the above-described steps (i) to (iv). In the step of obtaining the positive electrode plate, the positive electrode plate can be prepared by the procedure described in the section of the positive electrode plate.

Furthermore, the lead-acid battery can be obtained by a manufacturing method including a step of assembling a lead-acid battery by housing the positive electrode plate, the negative electrode plate, and the electrolyte solution obtained above in a container. In the step of assembling the lead-acid battery, the separator is usually disposed so as to be interposed between the positive electrode plate and the negative electrode plate. The step of assembling the lead-acid battery may include a step of forming at least one of the positive electrode plate and the negative electrode plate as necessary after the step of housing the positive electrode plate, the negative electrode plate, and the electrolyte solution in the container. The negative electrode plate, the electrolyte solution, and the separator are each prepared before being housed in the container.

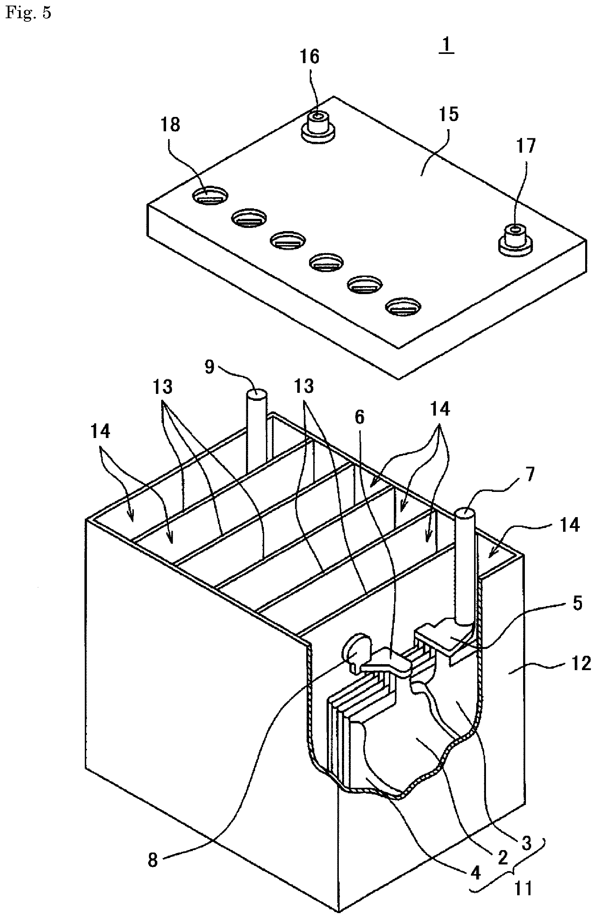

Fig. 5 shows an appearance of an example of the lead-acid battery according to the embodiment of the present invention.

A lead-acid battery 1 includes a container 12 that houses electrode groups 11 and an electrolyte solution (not shown). The inside of the container 12 is partitioned into a plurality of cell chambers 14 by partitions 13. One electrode group 11 is housed in each cell chamber 14. The opening of the container 12 is closed by a lid 15 including a negative electrode terminal 16 and a positive electrode terminal 17. The lid 15 is provided with a vent plug 18 for each cell chamber. At the time of water addition, the vent plug 18 is removed and water addition liquid is refilled. The vent plug 18 may have a function of discharging gas generated in the cell chamber 14 to the outside of the battery.

The electrode group 11 is formed by layering a plurality of negative electrode plates 2 and a plurality of positive electrode plates 3 with separators 4 interposed therebetween. Here, the bag-shaped separator 4 that houses the negative electrode plate 2 is shown, but the form of the separator is not particularly limited. In the cell chamber 14 located at one end portion of the container 12, a negative electrode shelf portion 6 connecting the plurality of negative electrode plates 2 in parallel is connected to a penetrating connection body 8, and a positive electrode shelf portion 5 connecting the plurality of positive electrode plates 3 in parallel is connected to a positive pole 7. The positive pole 7 is connected to the positive electrode terminal 17 outside the lid 15. In the cell chamber 14 located at the other end portion of the container 12, a negative pole 9 is connected to the negative electrode shelf portion 6, and the penetrating connection body 8 is connected to the positive electrode shelf portion 5. The negative pole 9 is connected to the negative electrode terminal 16 outside the lid 15. Each of the penetrating connection bodies 8 passes through a through hole provided in the partition 13 and connects the electrode groups 11 of the adjacent cell chambers 14 in series.

The positive electrode shelf portion 5 is formed by welding the lugs provided on the upper portions of the respective positive electrode plates 3 to each other by a cast-on-strap method or a burning method. The negative electrode shelf portion 6 is also formed by welding the lugs provided on the upper portions of the respective negative electrode plates 2 in accordance with the case of the positive electrode shelf portion 5.

The lid 15 of the lead-acid battery has a single structure (single lid), but is not limited to the illustrated example. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

Fig. 5 shows an example of a flooded-type battery (vent type battery), but the lead-acid battery may be a valve regulated battery (VRLA type). In the flooded-type battery, the effect of suppressing the softening and falling off of the positive electrode material tends to be remarkable as compared with the valve regulated battery, and thus the above aspect of the present invention is particularly suitable for the flooded-type battery.

Next, performance evaluation of the lead-acid battery will be described.

[Evaluation of test battery]

(A) First single-plate overcharge test

Using a predetermined test battery, an operation (one week) of performing an overcharge test with a constant current of 1.7 A (current density: 0.0054 A/cm$^2$) in a water bath at 75 °C $\pm$ 2 °C for five days, and then pausing for two days is repeated for three weeks. The apparent current collector area at the time of calculating the current density is twice the product of the height and the width of the outer dimensions of the frame rib of the positive electrode current collector.

After the overcharge test for three weeks, the positive electrode current collector taken out from the test battery in a full charge state is evaluated according to the following (a) or (b). At this time, the positive electrode current collector used for the evaluation is prepared by being taken out from the test battery, washed with water, dried, and by removing the electrode material in accordance with the case of the current collector in forming the cross-section C.

(a) Corrosion rate

The corrosion rate of the positive electrode current collector is determined by the following formula.

$$\text{Corrosion rate (\%)} = \{(\text{Mass of positive electrode current collector before overcharge test - mass of positive electrode current collector from which corrosive layer is removed by mannitol treatment after overcharge test}) / (\text{mass of positive electrode current collector before overcharge test})\} \times 100$$

(b) Width elongation and height elongation of positive electrode current collector
The dimensions of the most expanded portion of the frame rib of the positive electrode current collector in a first direction (height direction) and a second direction (width direction) are measured, and the width elongation amount and the height elongation amount are determined in comparison with the initial dimensions.

(B) Second single-plate overcharge test

Using a predetermined test battery, an operation (one week) of performing an overcharge test with a constant current (current (A) which is 0.2 times as large as a value obtained by dividing a numerical value (Ah) described as the five-hour rate rated capacity by the number of positive electrode plates per cell) in a water bath at 75 °C $\pm$ 2 °C for five days, and then pausing for two days is repeated for four weeks. For example, in the case of a battery having a five-hour rate rated capacity of 30 Ah and 12 V composed of six positive electrode plates and seven negative electrode plates, the rated capacity of the single plate cell (one positive electrode plate, two negative electrode plates) is calculated as 30 ÷ 6 = 5 Ah, and the current value in the second single-plate overcharge test is 5 × 0.2 = 1A.

After the overcharge test for four weeks, for the positive electrode current collector taken out from the test battery in a full charge state, the dimension of the most expanded portion of the frame rib in the second direction (width direction) is measured, and the width elongation amount is determined in comparison with the initial dimension. At this time, the positive electrode current collector used for the evaluation is prepared by being taken out from the test battery, washed with water, dried, and by removing the electrode material in accordance with the case of the current collector in forming the cross-section C.

(C) Repeated 5hR charge-discharge test

The test is carried out as follows in a water bath at 25 °C $\pm$ 2 °C using a predetermined test battery. The battery is discharged to 1.75 V/cell at a constant current (current (A) which is 0.2 times as large as the numerical value (Ah) described as the five-hour rate rated capacity), and then charged to 135% of the discharge amount at a constant current (current (A) which is 0.2 times as large as the numerical value (Ah) described as the five-hour rate rated capacity). The same cycle is repeated five times, and the percentage of the 5hR discharge capacity at the fifth cycle to the initial capacity (percentage to initial capacity) (%) when the initial capacity (5hR discharge capacity) is 100% is determined.

(D) Repeated 5hR charge-discharge test after overcharge (after high-temperature overcharge)

(a) Third single-plate overcharge test

Using a predetermined test battery, an operation (one week) of performing an overcharge test similar to the second single-plate overcharge test for five days, and then pausing for two days is repeated for two weeks.

(b) Repeated 5hR charge-discharge test

Using the test battery after the third single-plate overcharge test, the repeated 5hR charge-discharge test is repeatedly performed similarly to that in the above (C), and the percentage of the 5hR discharge capacity at the fifth cycle to the initial capacity (initial capacity ratio) (%) when the initial capacity (5hR discharge capacity) is 100% is determined.

Hereinafter, the embodiments of the present invention will be described more specifically based on Examples and Comparative Examples, but the present invention is not limited to the following Examples.

< < Lead-acid batteries A11 to A13, B11 to B13, and B21 to B26 > >

(1) Preparation of lead-acid battery

(a) Preparation of current collector

A rolled sheet of a Pb-Ca-Sn-based alloy is punched, and the inner rib is pressed to obtain each of current collectors a11 to a13, b11 to b13, and b21 to b26 shown in Table 1. At this time, the percentage R1 is adjusted by adjusting the speed of the press and the press pressure. The ratio W1/W2 is adjusted by adjusting a percentage between a portion removed by punching and a remaining portion when the rolled sheet is punched. In the current collector a12, the thickness of the inner rib is 0.95 mm, the width of the frame rib is 1.0 mm, and WLH/WLW is 1.37. WLH/WLW of each of the current collectors a11 and a13 is 1.3 or more.

(b) Preparation of positive electrode plate

A positive electrode paste containing lead powder is prepared, each current collector is filled with the positive electrode paste, and the paste is cured and dried to prepare an unformed positive electrode plate. The density of the positive electrode material after formation is adjusted to 3.6 g/cm3.

(c) Preparation of negative electrode plate

A lead powder, water, dilute sulfuric acid, barium sulfate, carbon black, and an organic expander are mixed to prepare a negative electrode paste. The same current collector as that used for the positive electrode plate is filled with the negative electrode paste, and the paste is cured and dried to obtain an unformed negative electrode plate.

(d) Preparation of test battery X

A lead-acid battery (test battery X: rated voltage of 2 V, rated five-hour rate capacity of 6 Ah) is assembled using an unformed positive electrode plate containing a positive electrode current collector and a positive electrode material. The test battery X includes one unformed positive electrode plate and two unformed negative electrode plates sandwiching the unformed positive electrode plate, and is subjected to formation in an electrolyte solution. The negative electrode plate is housed in a bag-shaped separator. As the electrolyte solution, a sulfuric acid aqueous solution is used. After formation, in the test battery in a full charge state, the specific gravity of the electrolyte solution at 20 °C is adjusted to 1.28.

(2) Evaluation

Using the test battery X, a repeated 5hR charge-discharge test after high-temperature overcharge is performed according to the procedure described above.

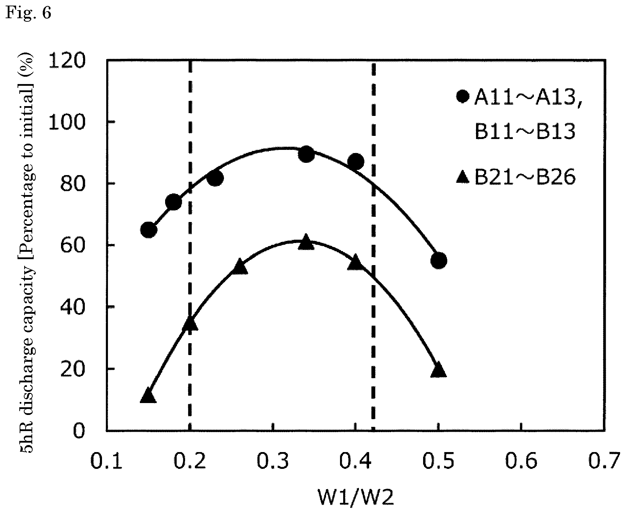

The results are shown in Table 1 and Fig. 6.

[Table 1]

| | B11 | B12 | A11 | A12 | A13 | B13 | B21 | B22 | B23 | B24 | B25 | B26 |
|---|---|---|---|---|---|---|---|---|---|---|---|---|
| Current collector | b11 | b12 | a11 | a12 | a13 | b13 | b21 | b22 | b23 | b24 | b25 | b26 |
| R1 (%) | 83 | | | | | | 44 | | | | | |
| W1/W2 | 0.15 | 0.18 | 0.23 | 0.34 | 0.40 | 0.50 | 0.15 | 0.20 | 0.26 | 0.34 | 0.40 | 0.50 |
| Shape of cross section C | Octagon | | | | | | | | | | | |
| 5hR discharge capacity [Percentage to initial] (%) | | 65.0 74.0 | 81.8 | | 89.5 87.1 | 55.0 | 11.6 | 35.0 | 53.3 | 61.2 | 54.6 | 19.9 |

As shown in Table 1 and Fig. 6, when the ratio W1/W2 is in the range of 0.2 or more and 0.42 or less, a high 5hR discharge capacity tends to be obtained even after high-temperature overcharge as compared with a case where W1/W2 is out of this range. However, when the percentage R1 of the first portion is less than 50%, even if the ratio W1/W2 is controlled to 0.2 or more and 0.42 or less, the 5hR discharge capacity after high-temperature overcharge is as low as about 60% at the maximum. On the other hand, when the ratio W1/W2 is 0.2 or more and 0.42 or less and the percentage R1 is 50% or more, a high 5hR discharge capacity of 80% or more can be secured after high-temperature overcharge. This is considered to be because by setting the percentage R1 to 50% or more while controlling the ratio W1/W2 to a range of 0.2 or more and 0.42 or less, deformation itself due to stress of the corrosive layer is reduced, uneven distribution of the corrosive layer is suppressed, and falling of the electrode material is suppressed.

< < Lead-acid batteries A31 to A33 and B31 > >

(1) Preparation of lead-acid battery

Current collectors a31 to a33 and b31 shown in Table 2 are prepared. The percentage R1 and the ratio W1/W2 are adjusted similarly to the case of the lead-acid battery A11. A lead-acid battery (test battery Y) is assembled using the obtained current collectors without carrying a positive electrode material. As the electrolyte solution, a sulfuric acid aqueous solution having a specific gravity of 1.28 at 20 °C is used. Except for these, the test battery Y is assembled similarly to the case of the lead-acid battery A11. The test battery Y includes one positive electrode current collector, two formed negative electrode plates sandwiching the positive electrode current collector, and an electrolyte solution. The negative electrode plate is housed in a bag-shaped separator.

(2) Evaluation

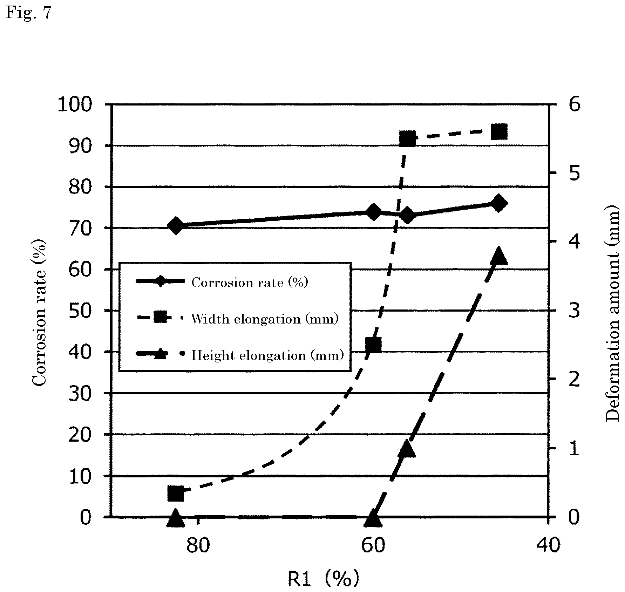

The first single-plate overcharge test is performed using the test battery Y according to the procedure described above. The results are shown in Table 2 and Fig. 7. Fig. 7 shows the relationship between the percentage R1 and the corrosion rate and the deformation amount (width elongation and height elongation of current collector) for the current collectors a31 to a33 and b31. W1/W2 in a31 to a33 is within a range of 0.2 to 0.42.

The first single-plate overcharge test is performed using the test battery Y according to the procedure described above. The results are shown in Table 2 and Fig. 7. Fig. 7 shows the relationship among the percentage R1, the corrosion rate, and the deformation amount (width elongation and height elongation of current collector) for the current collectors a31 to a33 and b31.

[Table 2]

|  | Current collector | R1 (%) | Corrosion rate (%) | Width elongation (mm) | Height elongation (%) |
|---|---|---|---|---|---|
| B31 | b31 | 45.7 | 76.0 | 5.6 | 3.8 |
| A31 | a31 | 60.0 | 73.9 | 2.5 | 0 |
| A32 | a32 | 82.6 | 70.6 | 0.35 | 0 |
| A33 | a33 | 56.2 | 73.1 | 5.5 | 1.0 |

As shown in Table 2 and Fig. 7, although the corrosion rate does not change so much, the height elongation is suppressed when the percentage R1 is 50% or more, and both the height elongation and the width elongation are greatly suppressed when the percentage R1 is 60% or more. From the viewpoint of further enhancing the effect of suppressing the width elongation, the percentage R1 may be 75% or more or 80% or more.

< < Lead-acid batteries A41 to A47 > >

(1) Preparation of lead-acid battery

Current collectors a41 to a47 shown in Table 3 are prepared. The percentage R1 and the ratio W1/W2 are adjusted similarly to the case of the lead-acid battery A11. Using the obtained current collectors as a positive electrode current collector and a negative electrode current collector, an unformed positive electrode plate and an unformed negative electrode plate are prepared similarly to the case of the lead-acid battery A11. A lead-acid battery (test battery Z) is assembled using the obtained unformed positive electrode plate and negative electrode plate. The unformed negative electrode plate is housed in a bag-shaped separator, and an electrode group is fabricated of eight unformed negative electrode plates and eight unformed positive electrode plates. The electrode group is housed in a polypropylene container together with an electrolyte solution, and subjected to formation in the container to prepare the test battery Z (12 V, rated five-hour rate capacity 48 Ah). As the electrolyte solution, a sulfuric acid aqueous solution is used. After formation, in the test battery in a full charge state, the specific gravity of the electrolyte solution at 20 °C is adjusted to 1.28.

(2) Evaluation

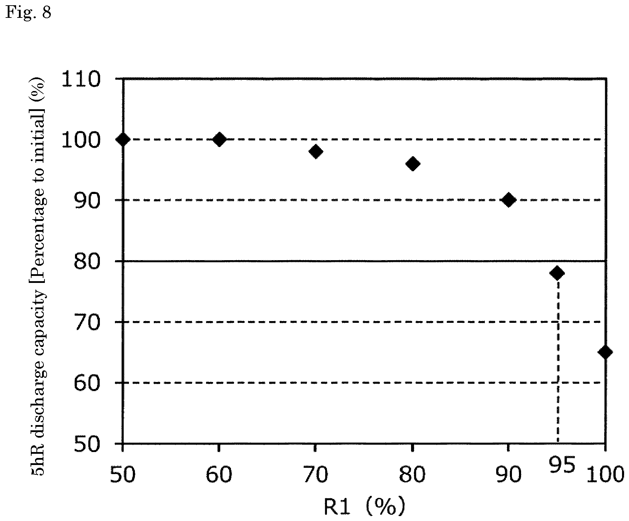

Using the test battery Z, a repeated 5hR charge-discharge test is performed according to the procedure described above. The results are shown in Table 3 and Fig. 8. Fig. 8 shows the relationship between the percentage R1 and the 5hR discharge capacity (percentage to initial) (%) in the case of using the current collectors a41 to a47. W1/W2 in a41 to a47 is about 0.3.

[Table 3]

|  | Current collector | R1 (%) | 5hR discharge capacity [Percentage to initial] (%) |
|---|---|---|---|
| A41 | a41 | 50 | 100 |
| A42 | a42 | 60 | 100 |
| A43 | a43 | 70 | 98 |
| A44 | a44 | 80 | 96 |
| A45 | a45 | 90 | 90 |
| A46 | a46 | 95 | 78 |
| A47 | a47 | 100 | 65 |

As shown in Table 3 and Fig. 8, when the percentage R1 is 50% or more, a relatively high 5hR discharge capacity is obtained. When the percentage R1 exceeds 95%, the 5hR discharge capacity tends to decrease. Therefore, it can be understood that it is preferable to control the percentage R1 to 95% or less from the viewpoint of easily securing a higher 5hR discharge capacity.

< < Lead-acid batteries A51 to A54 and B51 to B54 > >

(1) Preparation of lead-acid battery

Current collectors a51 to a54 and b51 to b54 shown in Table 4 are prepared. The percentage R1 and the ratio W1/W2 are adjusted similarly to the case of the lead-acid battery A11. The ratio WLH/WLW is adjusted by adjusting the speed of the press and the press pressure. Using the obtained current collectors as a positive electrode current collector and a negative electrode current collector, lead-acid batteries A51 to A54 and B51 to B54 (test batteries X) are prepared similarly to the case of the lead-acid battery A11.

(2) Evaluation

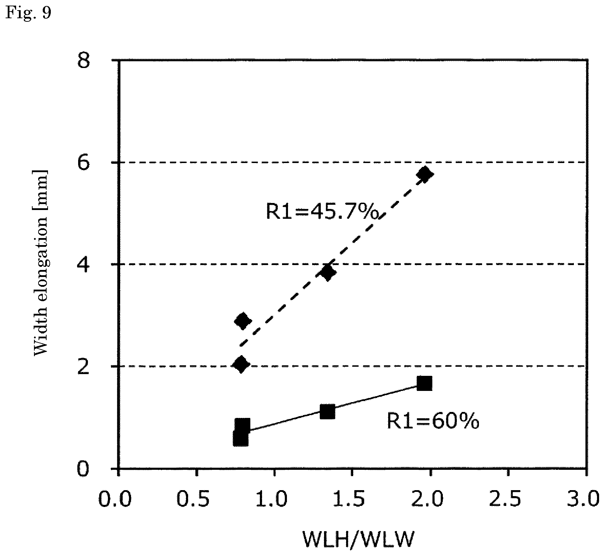

The second single-plate overcharge test is performed using the test battery X according to the procedure described above. The results are shown in Table 4 and Fig. 9. Fig. 9 shows the relationship between WLH/WLW and the width elongation when the current collectors a51 to a54 and b51 to b54 are used. W1/W2 in a51 to a54 is within a range of 0.2 to 0.42.

[Table 4]

|  | Current collector | R1 (%) | WLH/WLW | Width elongation (mm) |
|---|---|---|---|---|
| A51 | a51 |  | 1.96 | 1.7 |
| A52 | a52 | 60 | 1.34 | 1.1 |
| A53 | a53 |  | 0.80 | 0.8 |
| A54 | a54 |  | 0.79 | 0.6 |

(continued)

|  | Current collector | R1 (%) | WLH/WLW | Width elongation (mm) |
|---|---|---|---|---|
| B51 | b51 |  | 1.96 | 5.8 |
| B52 | b52 | 45.7 | 1.34 | 3.8 |
| B53 | b53 |  | 0.80 | 2.9 |
| B54 | b54 |  | 0.79 | 2.0 |

As shown in Table 4 and Fig. 9, it can be seen that when the percentage R1 is 60%, the width elongation is suppressed, and in that case, the effect of suppressing the width elongation increases as WLH/WLW increases (particularly, when WLH/WLW is 0.8 or more).

INDUSTRIAL APPLICABILITY

The current collector for a lead-acid battery according to the present invention is applicable to valve regulated lead-acid batteries and flooded-type lead-acid batteries. A lead-acid battery including an electrode plate including a current collector can be suitably used as a starting power source for a vehicle (automobile, motorcycle, etc.) and a power source for an industrial energy storage apparatus (such as an electric vehicle (forklift, etc.)). These applications are merely examples, and the present invention is not limited to these applications.

DESCRIPTION OF REFERENCE SIGNS

1: lead-acid battery
2: negative electrode plate
3: positive electrode plate
4: separator
5: positive electrode shelf portion
6: negative electrode shelf portion
7: positive pole
8: penetrating connection body
9: negative pole
11: electrode group
12: container
13: partition
14: cell chamber
15: lid
16: negative electrode terminal
17: positive electrode terminal
18: vent plug
100A, 100B: current collector
110: frame rib
111: upper element
112: lower element
113, 114: side element
120: inner rib
120A, B1: longitudinal rib
120B: transverse rib
130: lug
132: lower protrusion (foot portion)
210: first portion of longitudinal rib
220: second portion of longitudinal rib

**Claims**

1. A current collector for a lead-acid battery, comprising:

   a frame rib; and
   an inner rib inside the frame rib,
   wherein the frame rib includes a lug, an upper element continuous with the lug, a lower element facing the upper element, and a pair of side elements connecting the upper element and the lower element,
   wherein the inner rib includes a longitudinal rib extending in a first direction from the upper element toward the lower element and a transverse rib extending in a second direction from one of the side elements toward the other of the side elements,
   wherein a stripe pattern of a metallic fibrous structure is observed in a cross-section perpendicular to the first direction of the longitudinal rib,
   wherein a peripheral region of the cross-section includes a first portion in which the fibrous structure extends along a contour of the cross-section, and a second portion other than the first portion,
   wherein a percentage R1 of a length of a contour corresponding to the first portion to a total length of the contour of the cross-section is 50% or more, and
   wherein a ratio W1/W2 of a mass W1 of the frame rib to a mass W2 of the inner rib is $0.2 \leq W1/W2 \leq 0.42$.

2. The current collector for a lead-acid battery according to claim 1, wherein the percentage R1 is 60% or more.

3. The current collector for a lead-acid battery according to claim 1 or 2, wherein the percentage R1 is less than 100%.

4. The current collector for a lead-acid battery according to claim 1, wherein the percentage R1 is less than 95%.

5. The current collector for a lead-acid battery according to claim 4, wherein the percentage R1 is less than 90%.

6. The current collector for a lead-acid battery according to any one of claims 1 to 5, wherein the cross-section has an octagonal shape.

7. The current collector for a lead-acid battery according to any one of claims 1 to 6,

   wherein the current collector is a punched current collector of a stretched sheet of lead or a lead alloy, and
   wherein a total length WLH of inner dimensions of the longitudinal rib and a total length WLW of inner dimensions of the transverse rib satisfy $WLH/WLW \geq 0.8$.

8. The current collector for a lead-acid battery according to claim 7, wherein the total length WLH of inner dimensions of the longitudinal rib and the total length WLW of inner dimensions of the transverse rib satisfy $WLH/WLW \geq 1.3$.

9. The current collector for a lead-acid battery according to claim 7 or 8, wherein the total length WLH of inner dimensions of the longitudinal rib and the total length WLW of inner dimensions of the transverse rib satisfy $WLH/WLW \leq 1.96$.

10. A positive electrode plate for a lead-acid battery, comprising:

    the current collector according to any one of claims 1 to 9; and
    a positive electrode material held by the current collector.

11. A lead-acid battery comprising:

    the positive electrode plate according to claim 10;
    a negative electrode plate; and
    an electrolyte solution.

Fig. 1A

MD
(Stretching direction)

Fig. 1B

MD
(Stretching direction)

Fig. 2A

Fig. 2B

Fig. 3

Fig. 4

Fig. 5

Fig. 6

Fig. 7

Fig. 8

Fig. 9

## INTERNATIONAL SEARCH REPORT

International application No.

PCT/JP2021/003250

### A. CLASSIFICATION OF SUBJECT MATTER
Int. Cl. H01M4/73(2006.01)i
FI: H01M4/73

According to International Patent Classification (IPC) or to both national classification and IPC

### B. FIELDS SEARCHED

Minimum documentation searched (classification system followed by classification symbols)
Int. Cl. H01M4/73

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-139215 A (GS YUASA INTERNATIONAL LTD.) 10 August 2017 | 1-11 |
| A | WO 2015/056417 A1 (GS YUASA INTERNATIONAL LTD.) 23 April 2015 | 1-11 |
| A | JP 6-267544 A (MATSUSHITA ELECTRIC INDUSTRIAL CO., LTD.) 22 September 1994 | 1-11 |
| A | JP 2012-174561 A (SHIN-KOBE ELECTRIC MACHINERY CO., LTD.) 10 September 2012 | 1-11 |
| P, A | WO 2020/080419 A1 (GS YUASA INTERNATIONAL LTD.) 23 April 2020 | 1-11 |

☒ Further documents are listed in the continuation of Box C.   ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06.04.2021 | 20.04.2021 |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

<table>
<tr><td colspan="3" style="text-align:center"><b>INTERNATIONAL SEARCH REPORT</b></td><td>International application No.</td></tr>
<tr><td colspan="3"></td><td>PCT/JP2021/003250</td></tr>
<tr><td colspan="4">C (Continuation).   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>P, A</td><td colspan="2">WO 2020/080422 A1 (GS YUASA INTERNATIONAL LTD.) 23 April 2020</td><td>1-11</td></tr>
</table>

Form PCT/ISA/210 (continuation of second sheet) (January 2015)

INTERNATIONAL SEARCH REPORT
Information on patent family members

| | International application No. |
| --- | --- |
| | PCT/JP2021/003250 |

| Patent Documents referred to in the Report | Publication Date | Patent Family | Publication Date |
| --- | --- | --- | --- |
| JP 2017-139215 A | 10.08.2017 | US 2017/0222214 A1<br>EP 3203572 A1<br>CN 107026271 A<br>KR 10-2017-0092111 A | |
| WO 2015/056417 A1 | 23.04.2015 | JP 2019-117802 A<br>US 2016/0254570 A1<br>EP 3059791 A1<br>CN 105917503 A | |
| JP 6-267544 A | 22.09.1994 | (Family: none) | |
| JP 2012-174561 A | 10.09.2012 | (Family: none) | |
| WO 2020/080419 A1 | 23.04.2020 | (Family: none) | |
| WO 2020/080422 A1 | 23.04.2020 | (Family: none) | |

Form PCT/ISA/210 (patent family annex) (January 2015)

**REFERENCES CITED IN THE DESCRIPTION**

**Patent documents cited in the description**

- JP 51060936 A
- JP 2012174561 A
- JP 5054893 A